# EUROPÄISCHE PATENTSCHRIFT

(11) **EP 2 079 615 B1**
(45) Veröffentlichungstag und Bekanntmachung des Hinweises auf die Patenterteilung: **20.01.2010**
(21) Anmeldenummer: 07818907.3
(22) Anmeldetag: 11.10.2007
(51) Int. Cl.: B60R 21/231, B60R 21/233

(54) **AIRBAG MIT EINER FLEXIBLEN BEFESTIGUNGSLASCHE**
AIRBAG WITH A FLEXIBLE FASTENING TAB
AIRBAG AVEC UNE PATTE DE FIXATION FLEXIBLE

(30) Priorität: 16.10.2006 DE 102006049418; 20.02.2007 DE 102007008649
(43) Veröffentlichungstag der Anmeldung: 22.07.2009
(73) Patentinhaber: Autoliv Development AB, 447 83 Vargarda (SE)
(72) Erfinder: ORAL, Ridvan, 85250 Altomünster (DE); KROLL, Jack, 44850 Tollered (SE); KARLSSON, David, 22649 Lund (SE); KJELL, Fredrik, 441 40 Alingsas (SE); LINDBERG, Ken, 447 31 Vargarda (SE); JORLÖV, Andreas, 441 39 Alingsas (SE)
(74) Vertreter: Stornebel, Kai
(86) Internationale Anmeldenummer: PCT/EP2007/008836
(87) Internationale Veröffentlichungsnummer: WO 2008/046550

(56) Entgegenhaltungen:
- EP-A- 0 878 363
- EP-A- 1 338 482
- EP-A- 1 580 083
- EP-A- 1 683 690
- WO-A-2005/049390

## Beschreibung

Die Erfindung betrifft einen Airbag mit einer flexiblen Befestigungslasche mit einer Befestigungsöffnung zur Festlegung an einem Kraftfahrzeug mit einem Formschlusselement.

Airbags, insbesondere so genannte aufblasbare Vorhänge (Inflatable Curtains) werden über Befestigungslaschen in einer Fahrzeugstruktur oberhalb der Fensterlinie an dem Dachrahmen des Kraftfahrzeuges befestigt. Dabei werden die flexiblen Befestigungslaschen in der Regel über Formschlusselemente an dem Dachrahmen gehalten und gewährleisten, dass der eingerollte Airbag in der montierten, zusammengelegten oder zusammengefalteten Stellung verbleibt, bis er gezündet wird. Um den Bauraum möglichst gut auszunutzen und den Raumgegebenheiten im Dachrahmenbereich Rechnung zu tragen, wird der Airbag oberhalb der Befestigungslaschen untergebracht. Eine solche Anbringung ist aus der WO 2005/094390 A1 bekannt. Das Problem bei einer solchen Anordnung besteht darin, dass das Formschlusselement in der Regel eine scharfe Kante ausbildet, an der die Befestigungslasche geknickt wird, wenn der Airbag sich während des Entfaltens nach unten erstreckt und sich vor die Fenster legt. Dies kann zu lokalen Überbelastungen in der Lasche und dem Formschlusselement und zu einem Ausreißen bzw. Abreißen führen, was aus Sicherheitsgründen zu vermeiden ist.

Die EP 1 683 690 A1 beschreibt einen Airbag gemäß dem Oberbegriff des Hauptanspruches.

Aufgabe der vorliegenden Erfindung ist es daher, einen Airbag bereitzustellen, der ein solches Risiko vermindert oder vermeidet. Erfindungsgemäß wird diese Aufgabe durch einen Airbag mit den Merkmalen des Anspruchs 1 gelöst. Vorteilhafte Ausgestaltungen der Erfindung sind in den Unteransprüchen aufge-Der erfindungsgemäße Airbag mit einer flexiblen Befestigungslasche mit einer Befestigungsöffnung zur Festlegung an einem Kraftfahrzeug mit einem Formschlusselement sieht vor, dass in der Lasche ein Befestigungsbereich und ein Faltbereich ausgebildet sind. Die Befestigungsöffnung ist in dem Befestigungsbereich und eine Faltöffnung in dem Faltbereich ausgebildet und die Faltöffnung so bemessen ist, dass der Faltbereich zumindest teilweise über das Formschlusselement klappen kann. Die Faltöffnung ist somit so groß bemessen, dass der Faltbereich über das Formschlusselement, das durch die Faltöffnung hindurchragt, herumklappen kann, während das Formschlusselement selbst durch die Befestigungsöffnung ragt und den Befestigungsbereich an dem Kraftfahrzeug festlegt. Die Faltöffnung ist somit größer dimensioniert als die Befestigungsöffnung. Die Faltöffnung ist größer als der Kopfbereich des Formschlusselementes ausgebildet, um einen Durchtritt zu erleichtern.

Eine Weiterbildung der Erfindung sieht vor, dass der Befestigungsbereich und der Faltbereich aufeinander gelegt sind, wobei in einem inaktiven Zustand die Befestigungsöffnung der Faltöffnung gegenüberliegt oder auf ihr aufliegt

Eine Weiterbildung der Erfindung sieht vor, dass die Befestigungsöffnung zentral in der Faltöffnung positioniert ist, wobei diese Positionierung für den Montagezustand gilt. Die Erfindung sieht ebenfalls vor, dass der Faltbereich auf den Befestigungsbereich draufgefaltet sein kann und eine Faltlinie der Lasche an der Unterkante der Faltöffnung verläuft, so dass der gesamte Bereich der Faltöffnung ausgenutzt werden kann. Die Faltung der Lasche zu einer zweilagigen Befestigungslasche hat den Vorteil, dass nur ein Materialzuschnitt erfolgen muss, wodurch der logistische Aufwand und der Montageaufwand verringert werden.

Der Faltbereich und der Befestigungsbereich der Lasche können aneinander fixiert sein und sind bevorzugt miteinander verklebt, verschweißt oder vernäht, wodurch sich auf einfache Art und Weise haltbare Verbindungen des Faltbereiches an dem Befestigungsbereich herstellen lassen.

Um ein leichtes Herunterklappen des Gassackes und des Faltbereiches zu ermöglichen, sind der Befestigungsbereich und der Faltbereich linienartig aneinander fixiert, wobei die linienartige Fixierung parallel oder kollinear zu der Klappachse des Faltbereiches verläuft. Der Ort der Fixierung liegt im Bereich der Befestigungsöffnung oder unterhalb der Befestigungsöffnung, um einen ausreichenden Faltraum bereitzustellen, so dass der Faltbereich sich noch über den Kopf des Befestiqunqsmittets herumlegen und der Kopf des

Befestigungsmittels herumlegen und der Kopf des Befestigungsmittels durch den oberhalb der Fixierung liegenden Bereich der Faltöffnung hindurchtreten kann.

Eine Weiterbildung der Erfindung sieht vor, dass eine C-förmige Materialausnehmung als Faltöffnung um die Befestigungsöffnung herum ausgebildet ist, deren Mittelschenkel zwischen der Befestigungsöffnung und dem Gassack angeordnet ist und deren Seitenschenkel sich bis zum Formschlusselement erstreckt. Dadurch ist es möglich, dass die Befestigungslasche eine Klapp- und Scharnierfunktion ausübt, mittels der es ermöglicht wird, dass die Befestigungslasche und damit der gesamte Airbag an dem Formschlusselement, beispielsweise einem Befestigungsclip oder einer Schraube, vorbeiklappt, so dass keine scharfen Kanten und Knickbelastungen auf die Befestigungslasche in der Betriebsstellung einwirken.

In einer Weiterbildung der Erfindung ist vorgesehen, dass sich die Seitenschenkel der Materialausnehmung Gassack-abgewandt über das Formschlusselement hinaus erstrecken, um sicherzustellen, dass kein Kontakt während des Herumschwenkens um eine Achse, die durch die Endpunkte der Seitenschenkel geht, stattfindet. Zur Sicherheit ist es vorgesehen, dass die Seitenschenkel zumindest eine Länge aufweisen, die der Erstreckung des Formschlusselementes in Zugrichtung entspricht,
wobei davon ausgegangen wird, dass die Erstreckung in Zugrichtung nicht größer als die Erstreckung senkrecht zur Befestigungsebene des Airbags ist. Die Länge der Seitenschenkel ist so groß zu wählen, dass ein Vorbeiklappen ohne Kontakt mit dem Formschlusselement möglich ist.

Die Materialausnehmung für die Faltöffnung kann eingestanzt, ausgeschnitten oder herausgeschmolzen sein, wobei die Materialausnehmung bevorzugt abgerundet ausgebildet sein kann. Im Montagezustand ist der Airbag auf einer ersten Seite, z.B. oberhalb der Formschlusselemente angeordnet, wobei bei einer nicht im Wesentlichen waagerechten Anordnung der Befestigungslaschen und entsprechend waagerechten Ausgestaltung des Mittelschenkels der C-förmigen Materialausnehmung vorgesehen ist, dass der Airbag im Entfaltungszustand auf einer anderen Seite des Formschlusselementes angeordnet ist als im Montagezustand.

Neben dem Einbringen einer Materialausnehmung in einer angenähten Lasche bzw. in einer am Gassack ausgebildeten Lasche besteht die Möglichkeit, dass die Materialausnehmung um das Formschlusselement zwischen einem Materialausschnitt in dem Gassack und einer an dem Gassack befestigten Lasche, in der die Befestigungsöffnung zur Aufnahme des Formschlusselementes eingebracht ist, ausgebildet ist. Die Materialausnehmung besteht dann aus einem Freiraum, der zwischen der angenähten, angeschweißten oder angeklebten Lasche und dem Gassack ausgebildet ist. Eine Ausgestaltungsform dieser Lösung sieht vor, dass die Lasche einen Materialstreifen aufweist, in dem die Befestigungsöffnung ausgebildet ist und zumindest einen weiteren Materialstreifen aufweist, der an dem Gassack befestigt ist. Bevorzugt sind zwei weitere Materialstreifen neben dem Materialstreifen mit der Befestigungsöffnung ausgebildet und an dem Gassack angenäht, so dass eine Form der Lasche ausgebildet ist, die einem E ähnelt. Der korrespondierende Gassackbereich weist eine Ausnehmung im Bereich des Mittelstreifens auf, so dass der Gassack um den Mittelstreifen herum, in dem die Befestigungsöffnung mit dem Formschlusselement angeordnet ist, frei verschwenkbar ist.

Der Gassack ist an dem Faltbereich befestigt, insbesondere angenäht, angeschweißt oder angeklebt, wobei die Befestigung bevorzugt an dem der Faltlinie gegenüberliegenden Ende des Faltbereiches erfolgt.

Bei einer zweiteiligen Ausgestaltung der Lasche erfolgt die Befestigung an demjenigen Ende des Faltbereiches, der nicht mit dem Befestigungsbereich verbunden ist.

Im Montagezustand ist der Gassack bevorzugt angrenzend an eine erste Seite des Formschlusselementes angeordnet und im aufgeblasenen Zustand angrenzend an einer zweiten, der ersten Seite gegenüberliegenden Seite des Formschlusselementes angeordnet, was bedeutet, dass nach oder während des Aufblasens des Gassackes ein Umklappen des Gassackes und damit auch zumindest eines Teiles des Faltbereiches erfolgt.

Im inaktivierten Zustand ist der Gassack bevorzugt eingerollt, wobei das Einrollen in Richtung von dem Befestigungsbereich und damit von der Befestigungsstruktur, z. B. der Karosserie weg erfolgt und der Faltbereich auf der der Befestigungsstruktur des Kraftfahrzeuges abgewandten Seite des Befestigungsbereiches angeordnet ist.

Bevorzugt ist die Lasche aus einem Gewebe ausgebildet, wobei das Gewebe bevorzugt nicht aus dem Material besteht, aus dem der Gassack gefertigt ist. Das Gassackgewebe ist in der Regel höherwertiger und mit einer Beschichtung versehen, was es für den Einsatzzweck als Befestigungslasche zu teuer erscheinen lässt.

Die Befestigungslasche kann separat ausgebildet und an dem Airbag befestigt sein, wobei die Lasche aus einem Gewebe ausgebildet sein kann, das dem Airbaggewebe entspricht. Sofern keine hohen thermischen Belastungen in dem Befestigungsbereich auftreten, kann die Lasche aus einem Gewebe ausgebildet sein, dass von dem Airbaggewebe verschieden ist. Die Lasche ist somit bevorzugt separat ausgebildet und an dem Gassack befestigt, insbesondere angeklebt, angenäht oder angeschweißt.

Die Faltöffnung kann, ebenso wie die Befestigungsöffnung, eingestanzt, ausgeschnitten oder herausgeschmolzen sein, wobei die Öffnungen insbesondere abgerundet ausgebildet sind, um Spannungsspitzen zu vermeiden und das Gewebe möglichst wenig zu belasten.

Nachfolgend werden Ausführungsbeispiele der Erfindung anhand der beigefügten Figuren näher erläutert. Es zeigen:
- Figur 1 -: eine schematische Seitenansicht eines herkömmlichen Airbags;
- Figur 2 -: eine perspektivische Ausschnittsdarstellung gemäß Figur 1;
- Figur 3 -: eine schematische Darstellung eines Gassackes gemäß dem Stand der Technik im entfalteten Zustand;
- Figur 4 -: eine schematische Schnittdarstellung eines Gassackes gemäß der vorliegenden Erfindung;
- Figur 5 -: eine schematische, perspektivische Ansicht gemäß Figur 4;
- Figuren 6 bis: 8 - Ausführungsvarianten der Befestigungseinrichtung;
- Figur 9 -: eine schematische Darstellung des erfindungsgemäßen Gassackes im entfalteten Zustand;
- Figur 10 -: eine Detaildarstellung des Gassackes in Draufsicht im entfalteten Zustand;
- Figur 11 -: einen Zuschnitt einer Lasche;
- Figur 12 -: eine Lasche mit einem umgeschlagenen Befestigungsbereich;
- Figur 13 -: eine umgeschlagene Lasche in Draufsicht auf den Faltbereich;
- Figur 14 -: eine umgeschlagene Lasche in Draufsicht auf den Befestigungsbereich;
- Figur 15 -: eine schematische Querschnittsansicht des Airbags im montierten Zustand; sowie
- Figur 16 -: eine schematische Ansicht des Airbags im aktivierten Zustand.

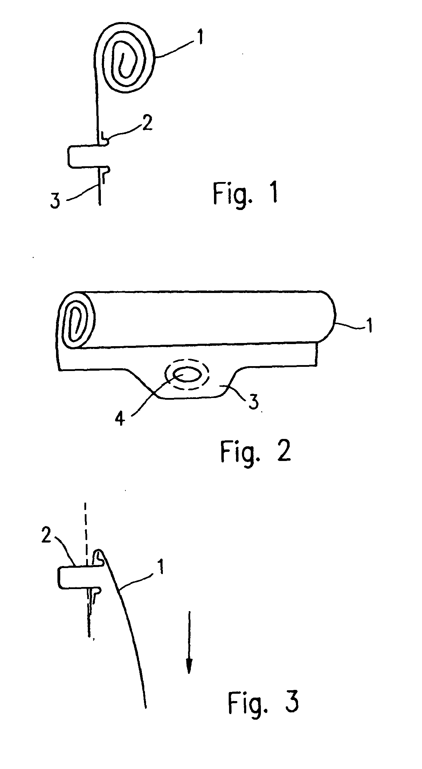

In der Figur 1 ist ein Airbag mit Gassack 1 in aufgerolltem Zustand in Schnittdarstellung gezeigt. Der Airbag ist über einen Befestigungsclip 2 formschlüssig an einer nicht dargestellten Fahrzeugstruktur gehalten. In der dargestellten Stellung, mit dem eingerollten Gassack 1 oberhalb des Formschlusselementes 2, ist der Airbag, bevorzugt als Inflatable Curtain ausgebildet, unterhalb einer Dachverkleidung oberhalb eines Fensterausschnittes eines Fahrzeuges montiert. An dem Gassack 1 bzw. im Randbereich sind Laschen 3 vorhanden, die einstückig mit dem Gassack 1 ausgebildet sein können oder daran angenäht sind. Innerhalb der Laschen 3 ist jeweils eine Befestigungsöffnung 4 angeordnet, durch die das Formschlusselement 2, vorliegend der Befestigungsclip hindurchgesteckt wird. Dies ist in der perspektivischen Darstellung gemäß Figur 2 dargestellt. Wird der Gassack 1 durch den nicht dargestellten Gasgenerator befüllt, entrollt sich der Gassack 1 und erstreckt sich nach unten, was in der Figur 3 dargestellt ist. Die Entfaltungsbewegung ist durch den Pfeil angedeutet. Während des Entfaltens treten hohe Zugkräfte und Belastungen, insbesondere auf den oberen Teil des Formschlusselementes 2 auf, so dass dieses beschädigt werden kann. Weiterhin besteht die Möglichkeit, dass durch die scharfe Kante des Formschlusselementes 2, die an dem Material der Lasche 3 anliegt, das Airbaggewebe bzw. das Laschenmaterial hohen Belastungen ausgesetzt ist, die zu einem Materialversagen führen können. Das Formschlusselement 2 kann entweder versagen oder schneidet in das Airbaggewebe ein, so dass es zu Unsicherheiten bei der Befestigung kommen kann.

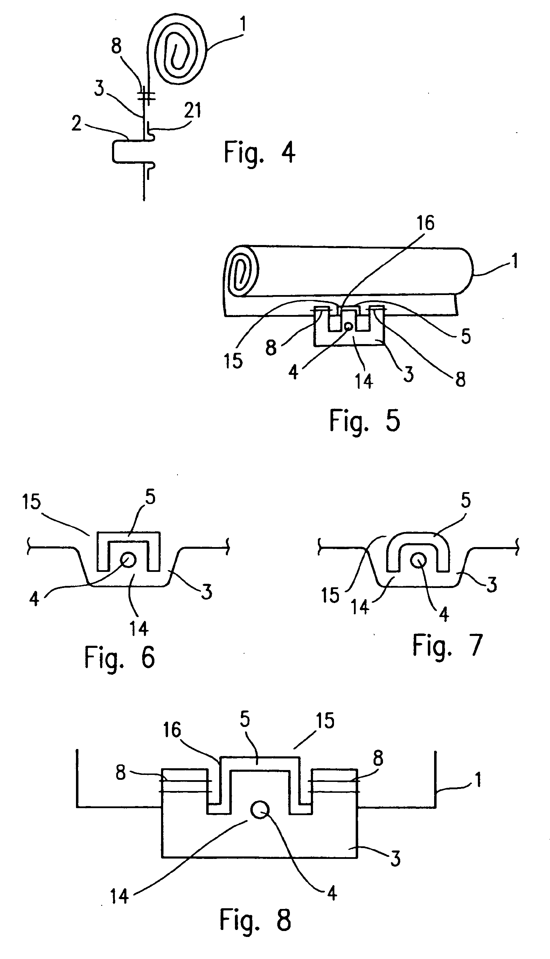

In der Figur 4 ist die erfindungsgemäße Befestigung eines Airbags dargestellt, bei der der eingerollte Gassack 1 wieder oberhalb des Formschlusselementes 2 angeordnet ist. In der Figur 4 ist die Befestigungslasche 3 als ein separates Gewebe ausgebildet, das über eine Befestigungsnaht 8 an dem Airbaggewebe befestigt ist. Alternativ zu einer Befestigung über eine Naht 8 kann die Lasche 3 auch angeschweißt oder angeklebt sein, grundsätzlich sind auch einstückige Ausbildungen der Befestigungslasche 3 vorgesehen.

In der Figur 5 ist ein Airbag mit aufgerolltem Gassack 1 vor der Montage gezeigt. An dem Gassack 1 ist die Lasche 3 über zwei Befestigungsnähte 8 angenäht. Die Befestigungslasche 3 ist dabei wie ein liegendes E ausgebildet und weist drei Streifen oder Laschen auf, von denen in der Mittellasche die Befestigungsöffnung 4 ausgebildet ist. Der Bereich um die Befestigungsöffnung 4 ist der Befestigungsbereich 14. Die beiden Seitenlaschen sind über die Befestigungsnähte 8 an dem Gassack 1 angenäht. In dem Gassack 1 ist eine Ausnehmung 16 dergestalt vorhanden, dass zusammen mit der Mittellasche eine C-förmige Materialausnehmung 5 ausgebildet ist, die sich zwischen dem Gassack 1 und der Befestigungsöffnung 4 erstreck und als Faltöffnung 5 bezeichnet wird. Der Mittelschenkel der Materialausnehmung oder Faltöffnung 5 liegt dabei zwischen der Befestigungsöffnung 4 und dem Gassack 1, die Seitenschenkel erstrecken sich beiderseits der Befestigungsöffnung 4 und im montierten Zustand beiderseits des Formschlusselementes 2. Der Bereich der Lasche 3 oder des Gassackes 1 um die Faltöffnung 5 wird als Faltbereich bezeichnet.

In der Figur 6 ist eine einstückige Ausgestaltung der Lasche 3 mit einer C-förmigen Materialausnehmung 5 um die Befestigungsöffnung 4 gezeigt, die Materialausnehmung 5 weist dabei im Wesentlichen rechtwinklig zueinander ausgerichtete Schenkel auf. In der Figur 7 ist eine abgerundete, halbkreisförmige Ausgestaltung der Materialausnehmung 5 gezeigt.

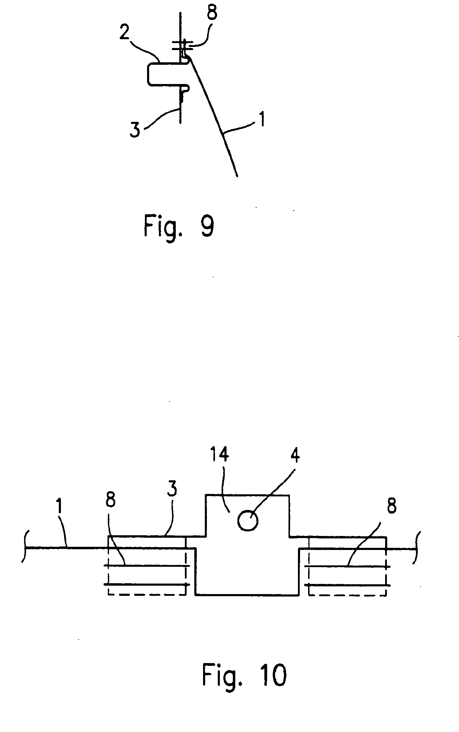

In der Figur 8 ist in einer vergrößerten Detaildarstellung die Ausführungsform gemäß der Figur 5 dargestellt. Die beiden Seitenlaschen sind über Nähte 8 an dem Gassack 1 befestigt. Die Mittellasche mit der Befestigungsöffnung 4 ragt in einen Materialausschnitt 16 innerhalb des Gassackes 1 hinein und bildet somit die C-förmige Materialausnehmung 5, deren Seitenschenkel so lang ausgebildet sind, dass der oberhalb der Befestigungsöffnung 4 angeordnete Gassack 1 nach unten klappen kann, ohne dass eine Zugbelastung isoliert auf das obere Ende des Formschlusselementes 2 ausgeübt werden würde. Weiterhin sind die Seitenschenkel so lang ausgebildet, dass der Gassack 1 ohne Kontakt mit dem Formschlusselement 2, das als Clip oder Schraube ausgebildet sein kann, vorbeiklappen kann. Vielmehr fungiert die Lasche 3 als ein Scharnier, so dass der Gassack 1 komplett nach dem Zünden des Gasgenerators und der einsetzenden Entfaltung nach unten klappen kann. Dies ist in der Figur 9 dargestellt.

In der Figur 10 ist der heruntergeklappte bzw. umgeklappte Gassack 1 in Draufsicht gezeigt. Die Seitenlaschen der Lasche 3 sind auf Höhe der Seitenschenkel der Materialausnehmung 6 umgeklappt und liegen unterhalb des Gassackes 1, was durch die unterbrochene Linie angedeutet ist. Die Befestigungsnähte 8 sind weiterhin zu erkennen. Statt einer hohen Materialbelastung für das Formschlusselement 2 und das Airbaggewebe kommt es nun zu einer gleichmäßigen Zugbelastung auf die Mittellasche, ohne dass eine ungleichmäßige Belastungsverteilung vorliegen würde.

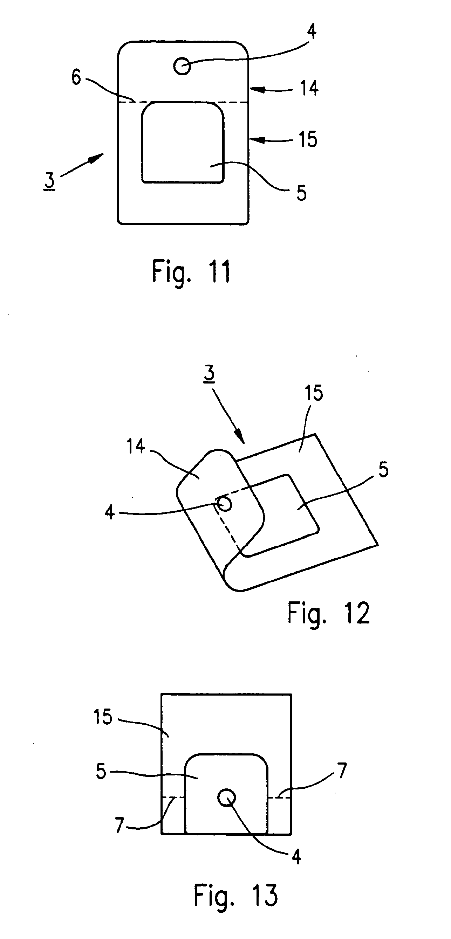

In der Figur 11 ist in Draufsicht schematisch eine Lasche 3 aus einem flexiblen Material, insbesondere einem Gewebe dargestellt, das eine Befestigungsöffnung 4, dargestellt als Rundloch, und eine Faltöffnung 5 aufweist, die beabstandet zu der Befestigungsöffnung 4 in der Lasche 3 ausgebildet ist. Entlang einer Faltlinie 6 kann der Zuschnitt der Lasche 3 gefaltet werden, so dass der der Befestigungsöffnung 4 zugeordnete Bereich als Befestigungsbereich 14 und der der Faltöffnung 5 zugeordnete Bereich als Faltbereich 15 bezeichnet werden kann. Alternativ zu einem Rundloch kann die Befestigungsöffnung 4 auch eckig ausgebildet sein, je nachdem, mit welchem Befestigungsmittel die Lasche 3 und damit der später in den Figuren gezeigte Gassack 1 an einer nicht dargestellten Fahrzeugstruktur festgelegt wird.

Die Faltöffnung 5 ist vollständig von dem Gewebe der Lasche 3 umgeben. Alternativ ist es vorgesehen, die Lasche 3 zweiteilig auszubilden, indem der Befestigungsbereich 14 und der Faltbereich 15 in dem Bereich, in dem sich in der Figur 11 die Faltlinie 6 befindet, zusammengenäht, verschweißt oder verklebt werden.

In der Figur 12 ist die Lasche 3 in einer Zwischenstufe dargestellt, in der der Befestigungsbereich 14 hochgeschlagen und auf den Faltbereich 15 gelegt wird. In der Figur 13 ist das Endstadium der Faltbewegung gezeigt, in dem der Faltbereich 15 an dem Befestigungsbereich 14 anliegt. Die Figur 13 ist eine Ansicht, bei der der Faltbereich 15 oberhalb des Befestigungsbereiches 14 angeordnet ist. Es ist zu erkennen, dass die Faltöffnung 5 größer als die Befestigungsöffnung 4 ist und die Befestigungsöffnung 4 im Wesentlichen zentral innerhalb der Faltöffnung 5 liegt. Andere Anordnungen der Befestigungsöffnung 4 innerhalb der Faltöffnung 5 im zusammengelegten bzw. aufeinandergelegten Zustand des Befestigungsbereiches 14 und des Faltbereiches 15 sind möglich.

Zur Fixierung der Befestigungs- und Faltbereiche 14, 15 sind zwei parallel zur Faltlinie 6 verlaufende Nähte 7 vorgesehen, die als Nähnaht, Schweißnaht oder Klebenaht ausgeführt sein können. Entlang dieser Nähte 7 faltet sich der Faltbereich 15 nach unten, wobei die Faltöffnung 5 so groß bemessen ist, dass der nach unten klappende Faltbereich 15 im Wesentlichen ohne Kontakt mit dem nicht dargestellten Formschlusselement bzw. dem Kopfteil des Formschlusselementes nach unten klappt.

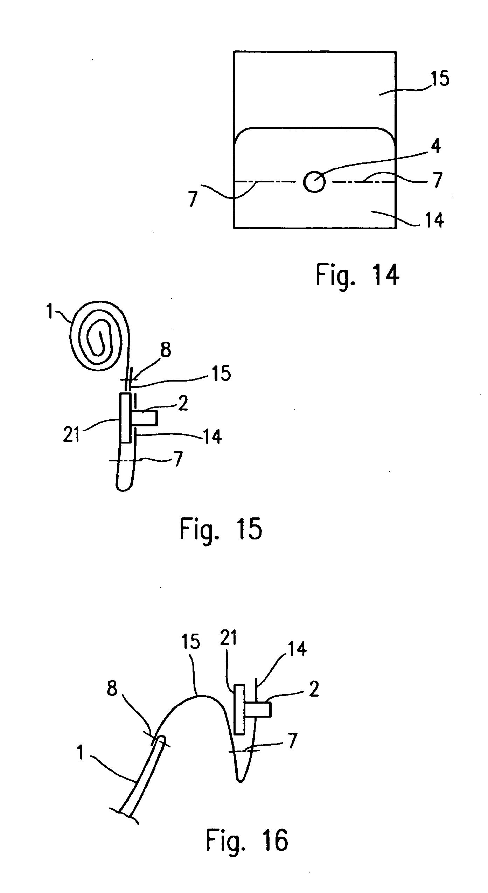

Figur 14 zeigt die Figur 13 in 180° Drehung, bei der der Befestigungsbereich 14 auf den Faltbereich 15 aufgeklappt ist und an der Oberseite liegt. Auch hier sind die Befestigungsnähte 7 gezeigt und zu erkennen.

In der Figur 15 ist eine schematische Schnittdarstellung eines befestigten Airbags mit einem aufgerollten Gassack 1 gezeigt, an den über eine Befestigungsnaht 8, beispielsweise eine Nähnaht, die Lasche 3 mit dem Faltbereich 15 und dem Befestigungslasche 14 gezeigt ist. Der Faltbereich 15 und der Befestigungsbereich 14 sind aufeinander geklappt und über die Verbindungsnaht 7 aneinander fixiert, so dass der Gassack 1 über die zweilagige Lasche 3 im Wesentlichen in der Position gehalten wird. Das Formschlusselement 2 mit dem Kopf 21, der größer als die Befestigungsöffnung 4 ist, tritt durch die Befestigungsöffnung 4 des Befestigungsbereiches 14 hindurch und legt den Airbag an der nicht dargestellten Fahrzeugstruktur fest. Der Kopf 21 wird dabei von der Faltöffnung 15 umgeben, wobei die Faltöffnung 5 so bemessen ist, dass der oberhalb der Verbindungsnaht 7 angeordnete Bereich des Faltbereiches 15 nach unten klappen kann.

Der Gassack 1 ist in Richtung auf den Befestigungsbereich 14 eingerollt, vorliegend entgegen dem Uhrzeigerrichtung eingedreht, also von der Wandung der Karosserie und dem Befestigungsbereich 14 weg, damit er sich leicht nach außen entrollen kann. Die Befestigung des Gassackes 1 an dem Faltbereich 15 erfolgt an dem oberen Ende des Faltbereiches 15, also an demjenigen Ende, das der Faltlinie 6 bzw. der Verbindungsstelle des Faltbereiches 15 mit dem Befestigungsbereich 14 gegenüberliegt.

In der Figur 16 ist der Airbag im entfalteten Zustand gezeigt, der Gassack 1 befindet sich nunmehr auf der anderen Seite des Befestigungselementes 2, verglichen mit dem Zustand in der Figur 15. Der Faltbereich 15 ist ungefähr in der Höhe der Verbindungsnaht 7 nach unten geklappt und wird durch die Verbindungsnaht 7 an dem Befestigungsbereich 14 fixiert. Der Faltbereich 15 ist über den Kopf 21 des Formschlusselementes 2 hinweggeschwenkt und ermöglicht ein einfaches Herunterklappen des Gassackes 1, damit dieser sich vor eine Fensteröffnung legen kann. Durch die Anordnung der Verbindungsnaht 7 in unterschiedlichen Höhen, ist es möglich, den Abdeckungsbereich des Gassackes 1 zu variieren, ebenfalls kann eine Variation des Abdeckungsbereiches des Gassackes 1 im entfalteten Zustand durch eine Variation der Anordnung der Befestigungsnaht 8 erfolgen.

Durch die Zweilagigkeit der Lasche 3 ist eine erhöhte Festigkeit gegeben. Bei einer einstückigen Ausgestaltung der Lasche 3 werden nur wenige Arbeitsschritte zur Herstellung benötigt, ebenso fällt die Bevorratung mehrerer Zuschnitte weg.

Das Formschlusselement 2 kann als Schraube oder als Clip ausgebildet sein, der in einer Aufnahme in die Fahrzeugstruktur eingesteckt wird und die Befestigungslasche zusammen mit dem Gassack 1 an der Fahrzeugstruktur festlegt. Die Verbindungsnaht 7 ermöglicht es, die Entfaltungskraft an der optimalen Position zu lokalisieren. Ebenso minimiert die Verbindungsnaht 7 die effektive Länge der Lasche 3 nach der Entfaltung und kann zudem als ein Energie absorbierendes Element wirken, das bei einem Reißen oder Versagen der Naht zu einer Entlastung innerhalb der Lasche 3 führt, wodurch zwar eine geringfügige Verlagerung des Gassackes in Kauf genommen wird, jedoch die Befestigung des Gassackes 1 an der Fahrzeugstruktur nicht gefährdet ist.

Durch die Faltöffnung 5 werden Biegemomente auf das Formschlusselement 2 vermieden, so dass bei einer Befestigung mittels eines eingesteckten Clips die Gefahr nicht besteht, dass dieser bei Aktivierung des Gassackes 1 herausgedrückt wird.

Die Krafteinleitung erfolgt nur noch senkrecht zur Längserstreckung des Formschlusselementes 2, also senkrecht zur Einführrichtung beispielsweise der Schraube oder des Clips, so dass eine erhöhte Stabilität und Sicherheit der Befestigung des Airbags bzw. des Gassackes gegeben ist.

Die Ausführungsformen des Airbags sind nicht nur auf dachmontierte Airbags beschränkt, sondern können überall dort eingesetzt werden, wo der Airbag in der Montageposition jenseits des Befestigungselementes bzw. des Formschlusselementes angeordnet ist und sich während des Entfaltens auf die andere Seite des Formschlusselementes bewegen muss.

## Patentansprüche

1. Airbag mit einer flexiblen Befestigungslasche (3) mit einer Befestigungsöffnung (4) zur Festlegung an einem Kraftfahrzeug mit einem Formschlusselement (2), wobei in der Lasche (3) ein Befestigungsbereich (14) und ein Faltbereich (15) ausgebildet sind und die Befestigungsöffnung (4) in dem Befestigungsbereich (14) und eine Faltöffnung (5) in dem Faltbereich (15) ausgebildet sind und die Faltöffnung (5) so bemessen ist, dass der Faltbereich (15) zumindest teilweise über das Formschlusselement (2) klappen kann, **dadurch gekennzeichnet, dass** die Faltöffnung (5) größer als der Kopfbereich (21) des Formschlusselementes (2) ausgebildet ist.

2. Airbag nach Anspruch 1, **dadurch gekennzeichnet, dass** der Befestigungsbereich (14) und der Faltbereich (15) aufeinander gelegt sind und die Befestigungsöffnung (4) der Faltöffnung (5) gegenüber liegt.

3. Airbag nach Anspruch 1 oder 2, **dadurch gekennzeichnet, dass** die Befestigungsöffnung (4) zentral in der Faltöffnung (5) positioniert ist.

4. Airbag nach einem der voranstehenden Ansprüche, **dadurch gekennzeichnet, dass** der Faltbereich (15) auf den Befestigungsbereich (14) gefaltet ist und eine Faltlinie (6) der Lasche (3) an der Unterkante der Faltöffnung (5) verläuft.

5. Airbag nach einem der voranstehenden Ansprüche, **dadurch gekennzeichnet, dass** der Faltbereich (15) und der Befestigungsbereich (14) der Lasche (3) aneinander fixiert, insbesondere miteinander verklebt, verschweißt oder vernäht sind.

6. Airbag nach Anspruch 5, **dadurch gekennzeichnet, dass** der Befestigungsbereich (14) und der Faltbereich (15) linienartig aneinander fixiert sind.

7. Airbag nach Anspruch 5 oder 6, **dadurch gekennzeichnet, dass** eine Fixierung (7) im Bereich der Befestigungsöffnung (4) oder unterhalb der Befestigungsöffnung (4) vorliegt.

8. Airbag nach Anspruch 1, **dadurch gekennzeichnet, dass** die Faltöffnung (5) als eine C-förmige Materialausnehmung um die Befestigungsöffnung (4) ausgebildet ist, deren Mittelschenkel zwischen der Befestigungsöffnung (4) und dem Gassack (1) angeordnet ist und deren Seitenschenkel sich bis zum Formschlusselement (2) erstrecken.

9. Airbag nach Anspruch 8, **dadurch gekennzeichnet, dass** die Seitenschenkel sich Gassack-abgewandt über das Formschlusselement (2) hinaus erstrecken.

10. Airbag nach Anspruch 8 oder 9, **dadurch gekennzeichnet, dass** die Seitenschenkel zumindest eine Länge aufweisen, die der Erstreckung des Formschlusselementes (2) in Zugrichtung entspricht

11. Airbag nach einem der Ansprüche 8 bis 10, **dadurch gekennzeichnet, dass** die Materialausnehmung (5) zwischen einem Materialausschnitt (16) in dem Gassack (1) und einer an dem Gassack (1) befestigten Lasche (3), in der die Befestigungsöffnung (4) eingebracht ist, ausgebildet ist.

12. Airbag nach Anspruch 11, **dadurch gekennzeichnet, dass** die Lasche (3) einen Materialstreifen aufweist, in dem die Befestigungsöffnung (4) ausgebildet ist, und zumindest einen weiteren Materialstreifen aufweist, der an dem Gassack (1) befestigt, insbesondere angeklebt, angenäht oder angeschweißt ist.

13. Airbag nach einem der voranstehenden Ansprüche, **dadurch gekennzeichnet, dass** der Gassack (1) im Montagezustand angrenzend an eine erste Seite der Formschlusselemente (2) angeordnet und im aufgeblasenen Zustand angrenzend an einer zweiten, der ersten Seite gegenüberliegenden Seite der Formschlusselemente (2) angeordnet ist.

14. Airbag nach Anspruch 13, **dadurch gekennzeichnet, dass** der Gassack (1) in Richtung von dem Befestigungsbereich (14) weg eingerollt ist und der Faltbereich (15) auf der der Befestigungsstruktur abgewandten Seite des Befestigungsbereiches (14) angeordnet ist.

15. Airbag nach einem der voranstehenden Ansprüche, **dadurch gekennzeichnet, dass** die Lasche (3) separat ausgebildet und an dem Gassack (1) befestigt ist.

## Claims

1. Airbag with a flexible fastening tab (3) having a fastening opening (4) for fixing to a motor vehicle by means of an interlocking element (2), wherein a fastening region (14) and a folding region (15) are formed in the tab (3), and the fastening opening (4) is formed in the fastening region (14) and a folding opening (5) is formed in the folding region (15), and the folding opening (5) is dimensioned such that the folding region (15) can at least partially fold over the interlocking element (2), **characterized in that** the folding opening (5) is designed to be larger than the head region (21) of the interlocking element (2).

2. Airbag according to Claim 1, **characterized in that** the fastening region (14) and the folding region (15) are placed one onto the other, and the fastening opening (4) faces the folding opening (5).

3. Airbag according to Claim 1 or 2, **characterized in that** the fastening opening (4) is positioned centrally in the folding opening (5).

4. Airbag according to one of the preceding claims, **characterized in that** the folding region (15) is folded onto the fastening region (14) and a folding line (6) of the tab (3) runs along the lower edge of the folding opening (5).

5. Airbag according to one of the preceding claims, **characterized in that** the folding region (15) and the fastening region (14) of the tab (3) are fixed to each other, and in particular are adhesively bonded, welded or sewn to each other.

6. Airbag according to Claim 5, **characterized in that** the fastening region (14) and the folding region (15) are fixed linearly to each other.

7. Airbag according to Claim 5 or 6, **characterized in that** a fixing (7) is present in the region of the fastening opening (4) or below the fastening opening (4).

8. Airbag according to Claim 1, **characterized in that** the folding opening (5) is designed as a C-shaped material recess around the fastening opening (4), the central limb of which material recess is arranged between the fastening opening (4) and the airbag (1) and the side limbs of which extend as far as the interlocking element (2).

9. Airbag according to Claim 8, **characterized in that** the side limbs extend, facing away from the airbag, beyond the interlocking element (2).

10. Airbag according to Claim 8 or 9, **characterized in that** the side limbs are of at least a length which corresponds to the extent of the interlocking element (2) in the pulling direction.

11. Airbag according to one of Claims 8 to 10,
**characterized in that** the material recess (5) is formed between a material cutout (16) in the airbag (1) and a tab (3) which is fastened to the airbag (1) and in which the fastening opening (4) is provided.

12. Airbag according to Claim 11, **characterized in that** the tab (3) has a material strip in which the fastening opening (4) is formed, and has at least one further material strip which is fastened, in particular adhesively bonded, sewn or welded, to the airbag (1).

13. Airbag according to one of the preceding claims, **characterized in that** the airbag (1), when installed, is arranged adjacent to a first side of the interlocking elements (2) and, when inflated, is arranged adjacent to a second side of the interlocking elements (2), which side faces the first side.

14. Airbag according to Claim 13, **characterized in that** the airbag (1) is rolled up in the direction away from the fastening region (14), and the folding region (15) is arranged on that side of the fastening region (14) which faces away from the fastening structure.

15. Airbag according to one of the preceding claims, **characterized in that** the tab (3) is formed separately and is fastened to the airbag (1).

## Revendications

1. Coussin gonflable comprenant une patte de fixation (3) flexible ayant une ouverture de fixation (4) pour la fixation à un véhicule automobile équipé d'un élément d'accouplement mécanique (2), une région de fixation (14) et une région de pliage (15) étant réalisées dans la patte (3), et l'ouverture de fixation (4) étant réalisée dans la région de fixation (14) et une ouverture de pliage (5) étant réalisée dans la région de pliage (15), et l'ouverture de pliage (5) est dimensionnée de façon que la région de pliage (15) peut se rabattre au moins partiellement sur l'élément d'accouplement mécanique (2), **caractérisé en ce que** l'ouverture de pliage (5) est réalisée plus grande que la région de sommet (21) de l'élément d'accouplement mécanique (2).

2. Coussin gonflable selon la revendication 1, **caractérisé en ce que** la région de fixation (14) et la région de pliage (15) sont superposées et l'ouverture de fixation (4) est en face de l'ouverture de pliage (5).

3. Coussin gonflable selon la revendication 1 ou 2, **caractérisé en ce que** l'ouverture de fixation (4) est positionnée de façon centrale dans l'ouverture de pliage (5).

4. Coussin gonflable selon l'une des revendications précédentes, **caractérisé en ce que** la région de pliage (15) est repliée sur la région de fixation (14) et une ligne de pliage (6) de la patte (3) s'étend au bord inférieur de l'ouverture de pliage (5).

5. Coussin gonflable selon l'une des revendications précédentes, **caractérisé en ce que** la région de pliage (15) et la région de fixation (14) de la patte (3) sont fixées l'une à l'autre, en particulier collées, soudées ou cousues ensemble.

6. Coussin gonflable selon la revendication 5, **caractérisé en ce que** la région de fixation (14) et la région de pliage (15) sont fixées l'une à l'autre suivant une ligne.

7. Coussin gonflable selon la revendication 5 ou 6, **caractérisé en ce qu'**il existe une fixation (7) dans la région de l'ouverture de fixation (4) ou sous l'ouverture de fixation (4).

8. Coussin gonflable selon la revendication 1, **caractérisé en ce que** l'ouverture de pliage (5) est réalisée autour de l'ouverture de fixation en tant qu'un évidement de matériau en forme de C, dont la branche du milieu est agencée entre l'ouverture de fixation (4) et le sac de gaz (1) et dont les branches latérales s'étendent jusqu'à l'élément d'accouplement mécanique (2).

9. Coussin gonflable selon la revendication 8, **caractérisé en ce que** les branches latérales s'étendent au-delà de l'élément d'accouplement mécanique (2) du côté éloigné du sac de gaz.

10. Coussin gonflable selon la revendication 8 ou 9, **caractérisé en ce que** les branches latérales présentent au moins une longueur qui correspond à l'étendue de l'élément d'accouplement mécanique (2) dans la direction de traction.

11. Coussin gonflable selon l'une des revendications 8 à 10, **caractérisé en ce que** l'évidement de matériau (5) est formé entre une découpe de matériau (16) dans le sac de gaz (1) et une patte (3) fixée au sac de gaz (1) et dans laquelle est incorporée l'ouverture de fixation (4).

12. Coussin gonflable selon la revendication 11, **caractérisé en ce que** la patte (3) présente une bande de matériau dans laquelle est réalisée l'ouverture de fixation (4), et présente au moins une autre bande de matériau qui est fixée au sac de gaz (1), en particulier collée, cousue ou soudée.

13. Coussin gonflable selon l'une des revendications précédentes, **caractérisé en ce qu'**à l'état de montage le sac de gaz (1) est disposé attenant à un premier côté de l'élément d'accouplement mécanique (2) et, à l'état gonflé, est disposé attenant à un deuxième côté de l'élément d'accouplement mécanique (2), opposé au premier côté.

14. Coussin gonflable selon la revendication 13, **caractérisé en ce que** le sac de gaz (1) est enroulé dans la direction éloignée de la région de fixation (14) et la région de pliage (15) est agencée sur le côté de la région de fixation éloigné de la structure de fixation.

15. Coussin gonflable selon l'une des revendications précédentes, **caractérisé en ce que** la patte (3) est réalisée séparément et fixée au sac de gaz (1).
